# EUROPÄISCHE PATENTSCHRIFT

(11) **EP 3 875 787 B1**
(45) Veröffentlichungstag und Bekanntmachung des Hinweises auf die Patenterteilung: **17.05.2023**
(21) Anmeldenummer: 20161290.0
(22) Anmeldetag: 05.03.2020
(51) Int. Cl.: F16B 12/20, F16B 12/32, F16B 12/50

(54) **BEFESTIGUNGSEINRICHTUNG FÜR EINE MÖBELUNTERKONSTRUKTION**
FIXING DEVICE FOR A FURNITURE SUB-STRUCTURE
DISPOSITIF DE FIXATION POUR UNE STRUCTURE DE MEUBLE

(43) Veröffentlichungstag der Anmeldung: 08.09.2021
(73) Patentinhaber: Sandhoff e.U., 5166 Perwang am Grabensee (AT)
(72) Erfinder: SANDHOFF, Raimund, 5166 Perwang am Grabensee (AT)
(74) Vertreter: Stolmár & Partner Patentanwälte PartG mbB

(56) Entgegenhaltungen:
- WO-A1-2015/145477
- GB-A- 2 571 143
- US-A1- 2013 326 976
- US-B1- 6 394 005

## Beschreibung

### Gebiet der Erfindung

Die Erfindung betrifft eine verstärkte Befestigungseinrichtung für eine Möbelunterkonstruktion wie beispielsweise ein Tischbein oder ein Stuhlbein.

### Stand der Technik

Eine Befestigungsvorrichtung für ein Tischbein an einer Tischplatte ist beispielsweise in der AT 12 617 U2 offenbart. Die dort beschriebene Befestigungsvorrichtung umfasst eine Klemmvorrichtung für eine Sitzbank- oder Tischunterkonstruktion, wobei innerhalb einer U-förmigen Vertiefung ein längs verlaufendes keilförmiges Klemmteil vorgesehen ist, das mit Gewindeschrauben versehen und mittels dieser verstellbar bzw. verspannbar ist. Ferner umfasst die Befestigungsvorrichtung zwei Distanzstäbe auf dem Boden, die für die einzuklemmende Sitzbank- oder Tischunterkonstruktion ausgeführt sind, an deren beiden seitlichen Oberkanten der Befestigungsplatte in Längsrichtung Bohrungen zur Befestigung auf einer Platte, insbesondere einer Sitzbank, Tisch- oder Arbeitsplatte, angeordnet sind.

Die Klemmvorrichtung ist aus fertigungs- und kostentechnischen Gründen meist aus Aluminium oder einem anderen weicheren Metall gefertigt. Durch die Belastung beim Einbau und der Verwendung der Befestigungsvorrichtung kann es passieren, dass sich die Klemmvorrichtung verformt, was für unflexible Unterkonstruktionen, bspw. aus Glas, äußerst nachteilig ist.

Die WO 2015/145477 A1 offenbart eine Verriegelungs- und Regulierungsvorrichtung für aus Glas hergestellte Paneele und Platten, die ein U-förmiges extrudiertes Profil umfasst, das unterseitig über Verriegelungsmittel an einer Bezugsfläche befestigt ist und das im zentralen Sitz des U-Profils die Platte aufnimmt, wobei innerhalb des zentralen Sitzes zwischen der Platte und dem extrudierten Profil mindestens eine Hülse eingesetzt ist, die sich am oberen Ende des flankierten Sitzes verjüngt und in Kontakt mit der Platte steht. Ferner ist zwischen dem verjüngten Abschnitt der Hülse und mindestens einer Innenwand des extrudierten Profils ein Keil eingesetzt, der an einer entsprechenden Einstellschraube befestigt ist, die senkrecht zur Bezugsfläche angeordnet ist und durch den Keil und die Hülse verläuft.

Die GB 2571143 A offenbart ein System zum Ausrichten eines Paneels, das eine Längswanne und ein in der Mulde angeordnetes Greifteil aufweist, wobei das Greifteil eine Kontaktfläche zum Ergreifen des Paneels, eine erste Verbindungsfläche in einem Winkel zu der Kontaktfläche hat und einer offenen Oberseite der Rinne zugewandt ist, wobei das System ein innerhalb der Rinne angeordnetes Einstellteil mit einem ersten Haken umfasst, der mit einer Seitenwand der Rinne in Eingriff steht und an einem zweiten Teil mit einer zweiten Verbindungsfläche befestigt ist. Der Abstand zwischen den beiden Teilen ist einstellbar, so dass die beiden Verbindungsflächen zusammenwirken, um im Gebrauch eine Platte in der Rinne festzuklemmen.

Die US 6,394,005 B1 offenbart einen gelenkigen Verriegelungsmechanismus zum Verriegeln und Entriegeln eines Schaftelements. Der Verriegelungsmechanismus hat ein Gehäuse zum Anbringen an einer beliebigen Stützfläche, einschließlich einer Unterseite eines Tisches. Eine Bedienungsperson zieht an einem Riegelbetätiger, um den Verriegelungsmechanismus zu entriegeln, wodurch sich eine Wellenelementhalterung innerhalb des Gehäuses zwischen einer ersten aufrechten Position und einer zweiten zusammengeklappten Position drehen kann. Um die Schaftelementhalterung in einer der beiden Positionen zu verriegeln löst der Bediener den Verriegelungsbetätiger, wodurch ein Finger an einem Verriegelungselement durch eine Feder in eine von zwei Nuten an der Schaftelementhalterung gedrückt wird und wobei dann die Schaftelementhalterung in der ersten aufrechten Position oder der zweiten gefalteten Position verriegelt wird.

### Darstellung der Erfindung

Aufgabe der vorliegenden Erfindung ist es, eine Befestigungseinrichtung für eine Möbelunterkonstruktion bereitzustellen, die das Lagerelement stabilisiert und ein Verformen zuverlässig und langfristig verhindert.

Eine erfindungsgemäße Befestigungseinrichtung für eine Möbelunterkonstruktion wie ein Bein für einen Tisch oder eine Sitzbank, umfasst ein zumindest abschnittsweise U-förmig ausgebildetes Lagerelement mit Aussparung, bei der zumindest eine der Innenseiten geneigt ausgebildet ist, und das Bohrlöcher aufweist, mittels der das Lagerelement mittels Schrauben an einer Möbelplatte befestigbar ist, und zumindest ein Klemmstück, das eine zur geneigten Innenseite des Lagerelements entsprechend geneigte Klemmstückseite aufweist und mit einer Spannschraube an der Basisplatte verschraubbar ist, so dass durch das Festziehen der Spannschraube eine Seitenkraft auf eine zu befestigende Unterkonstruktion wirkt und diese verklemmt, wobei die Befestigungseinrichtung ferner ein Verstärkungselement umfasst, das fest mit dem Lagerelement verbunden ist, so dass der Widerstand des Lagerelement gegenüber einem Verbiegen verstärkt ist, und das sich vorzugsweise bis in beide Endbereiche des Lagerelements erstreckt, und wobei das Lagerelement aus einem weicheren Material ausgebildet ist, als das Verstärkungselement. Dadurch ist das Verstärkungselement steifer und fester als das Lagerelement und der Widerstand gegenüber einer Verformung des Lagerelements wird vergrößert. Dass das Lagerelement weicher als das Verstärkungselement ist, ist nicht absolut, sondern nur relativ zwischen diesen beiden Elementen zu verstehen. Insbesondere ist das Lagerelement aus Aluminium, einer Aluminiumlegierung oder einer Legierung mit Aluminium ausgebildet und das Verstärkungselement weist (Edel)Stahl auf und/oder ist aus Edelstahl oder einer Edelstahllegierung ausgebildet. Aber das Lagerelement kann auch aus einem weicheren Stahl als das Verstärkungselement ausgebildet sein.

Das Verstärkungselement liegt vorzugsweise an zumindest zwei Außenseiten des U-förmigen Lagerelements an. Das Verstärkungselement dafür bevorzugt L-förmig ausgebildet, kann aber auch durch zwei getrennte I-förmige Platten bereitgestellt werden. Durch das zumindest zweiseitige Anliegen an dem Lagerelement wird die Verstärkungswirkung verbessert. Ferner können zumindest zwei Verstärkungselemente vorgesehen sein, die insbesondere symmetrisch angeordnet sind, bspw. in Bezug auf eine senkrechte Mittelachse des Lagerelements. Das U-förmige Lagerelement weist an den beiden Schenkeln seitlich abstehende, insbesondere rechtwinklig abstehende Vorsprünge auf und die Verstärkungselemente sind S-förmig oder doppel-L-förmig ausgebildet, so dass sie auch an den seitlich abstehenden Vorsprüngen anliegen. Auch die symmetrische Belastbarkeit und/oder die größere Anlagefläche zwischen Lagerelement und Verstärkungselement verbessert die Verstärkung.

Vorzugsweise sind zumindest in einem Verstärkungselement Bohrungen vorgesehen, die mit den Bohrungen zum Befestigen der Lagerelemente an der Möbelplatte übereinstimmen. Dadurch wird die Befestigung des Verstärkungselements am Lagerelement vereinfacht und kann ohne weitere Konstruktions- oder Hilfsmittel wie zusätzliche Schrauben oder Haftmittel verwirklicht werden.

Das Verstärkungselement ist bevorzugt in dem Lagerelement eingelassen, insbesondere derart, dass die Außenflächen von Verstärkungselement und Lagerelement bündig sind. Dadurch kann die Positionierung des Verstärkungselements am Lagerelement exakt festgelegt werden. Die Bündigkeit der Kanten vereinfacht den Einbau in die Möbelplatte, weil die Einlegenut Möbelplatte einheitliche und glatte Oberflächen ohne weitere Aussparungen aufweisen kann.

Bevorzugt erstreckt sich das Verstärkungselement über 90% der Länge des Lagerelements, vorzugsweise 95%, weiter vorzugsweise 98%. In einer speziellen Ausführungsform sind Lagerelement und Verstärkungselement gleich lang. Dadurch erstreckt sich die Verstärkungswirkung in jedem Fall in den Mittelbereich und in den Anfang der Endbereiche des Lagerelements, in denen sich die Verformung am ehesten negativ auswirkt.

### Kurze Beschreibung der Figuren

Figur 1 zeigt einen Querschnitt durch eine erste Ausführungsform einer Befestigungsvorrichtung; und
Fig. 2 zeigt einen Querschnitt durch eine zweite Ausführungsform einer Befestigungsvorrichtung.

### Beschreibung der bevorzugten Ausführungsformen

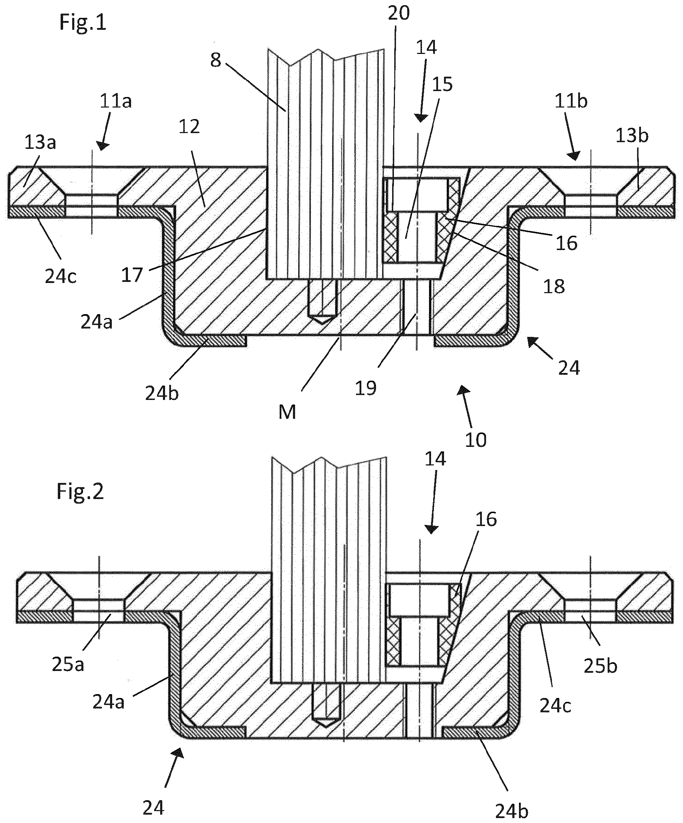

In den Figuren 1 und 2 ist jeweils ein Querschnitt dargestellt. Eine Längsrichtung, die entlang der Längserstreckung des Möbels und der Befestigungsvorrichtung 10 verläuft, geht also in die Zeichenebene hinein.

In Figur 1 ist eine erste Ausführungsform einer erfindungsgemäßen Befestigungsvorrichtung 10 dargestellt. Die Befestigungsvorrichtung 10 weist ein Lagerelement 12 auf, das zumindest Abschnittsweise U-förmig ausgebildet ist und eine Aussparung 14 hat. In der Aussparung kann eine Möbelunterkonstruktion 8 befestigt werden. In den Figuren ist eine Platte 8 dargestellt, die bspw. als Tischbein dienen und aus Glas hergestellt sein kann. Das Material der Unterkonstruktion 8 kann aber beliebig variieren und auch Holz, Metall oder Kunststoff umfassen. Die Ausrichtung der Befestigungsvorrichtung 10 ist daher "kopfüber" zur normalen Einbaukonstellation dargestellt, bei der die Befestigungsvorrichtung 10 auf der Unterseite der Möbelplatte eingebaut und befestigt ist.

Die Unterkonstruktion 8 wird mittels einem Klemmstück 16 in der Aussparung 14 festgeklemmt. Die Aussparung weist dazu bevorzugt eine senkrechte Seite17 und eine geneigte Seite 18 auf. Die Unterkonstruktion 8 liegt dann an der senkrechten Seite 17 an und das Klemmstück 16 wird zwischen die geneigte Seite 18 und die Unterkonstruktion 8 gesteckt. Zum Festziehen des Klemmstücks 16 weist das Klemmstück 16 ein Durchgangsloch 15 (mit oder ohne Gewinde), durch das die Schraube hindurchgesteckt oder -geschraubt wird, und das Lagerelement 12 ein Gewindeloch 19 auf, in das die Schraube eingeschraubt wird. Der Schraubenkopf stützt sich dann auf dem entsprechenden Absatz 20 ab und zieht das Klemmstück 16 nach unten, wodurch das Klemmstück 16 seitlich gegen die Unterkonstruktion 8 presst und diese in der Aussparung 14 festklemmt. Das Lagerelement 12 wird an der Möbelplatte bspw. mittels Schrauben befestigt. Für diesen Zweck sind Bohrungen 11a, 11b in der Lagerplatte 12 ausgebildet. Vorzugsweise ist eine Vielzahl von Bohrungen 11a, 11b entlang der Längserstreckung des Lagerelements 12 vorgesehen, die insbesondere in gleichmäßigen Abständen angeordnet sind. Analog können auch mehrere Klemmstücke 16 entlang der Unterkonstruktion vorgesehen sein, oder ein Klemmstück 16, dass der Länge der Unterkonstruktion 8 entspricht und mehrere Durchgangslöcher 15 aufweisen kann, die dann in den entsprechenden Gewindelöchern 19 im Lagerelement 12 befestigt werden.

Das Lagerelement 12 kann zu den U-Schenkeln zwei seitlich abstehende, insbesondere senkrecht abstehende, Vorsprünge 13a, 13b aufweisen. Diese eignen sich besonders zur Befestigung des Lagerelements 12 an der Möbelplatte mittels einer Schraubverbindung durch die Bohrungen 11a, 11b.

Um das Lagerelement zu stabilisieren ist ein Verstärkungselement 24 vorgesehen. Das Verstärkungselement 24 kann als rechteckige Platte ausgebildet sein, die an zumindest einer Seite des Lagerelements 12 angeordnet ist, um so den Widerstand des Lagerelements 12 gegen eine Verformung zu verbessern. Das Verstärkungselement 24 kann aber auch an zwei oder mehr Seiten des Lagerelements ausgebildet sein, insbesondere einstückig und L-förmig im Querschnitt mit unterschiedliche oder auch gleich langen Schenkeln 24a, 24b. In der gezeigten Ausführungsform weist das Lagerelement die Vorsprünge 13a und 13b auf und das Verstärkungselement 24 weist eine doppel-L-förmige oder S-förmige Querschnittsausgestaltung auf, bei der sich die Schenkel 24b, 24c auf gegenüberliegenden Seiten jeweils rechtwinklig von der Basisplatte 24a erstecken.

Das Verstärkungselement 24 ist vorzugsweise an der Lagerplatte 12 befestigt. Die Befestigung kann beispielsweise mit Leim oder einem anderen Haftmittel durchgeführt werden, bevorzugt wird das Verstärkungselement 24 aber mit einer Schraubverbindung befestigt. Insbesondere an der Lagerplatte 12 kann das Verstärkungselement 24 direkt an der Schaubverbindung bzw. den Bohrungen 11a, 11b befestigt werden, mit der die Lagerplatte 12 an der Möbelplatte angebracht wird, indem die Bohrungen 25a, 25b mit den Bohrungen 11a, 11b zentriert sind. Vorzugsweise ist auch am Verstärkungselement 24 eine Vielzahl der Bohrungen 25a, 25b entlang der Längserstreckung des Lagerelements 12 vorgesehen, die insbesondere in gleichmäßigen Abständen angeordnet sind. Die zum Verstärkungselement 24 gerichteten Kanten des Lagerelements 12 können abgerundet oder abgefast sein, und das Lagerelement kann abgerundete Kanten aufweisen, beispielsweise weil es aus einer einstückigen Metallplatte ausgebildet ist, die entlang der Längsrichtung ein- oder mehrfach gebogen ist.

Bevorzugt sind mehrere Verstärkungselemente 24 vorgesehen, die insbesondere symmetrisch zu einer Mittellinie M angeordnet sein können, die in den Figuren die Mittelebene der Längserstreckung des Lagerelements 12 ausbildet (in die Zeichenebene hinein). Konkret sind in dieser Ausführungsform zwei Verstärkungselemente 24 auf beiden Seiten der Aussparung 14 angeordnet.

Das Lagerelement 12 weist ein Material auf, das weicher als das des Verstärkungselements 24 ist. Beispielsweise kann das Lagerelement 12 Aluminium aufweisen oder aus einer Aluminiumlegierung oder einer Legierung mit Aluminium ausgebildet sein und das Verstärkungselement weist (Edel)Stahl auf und/oder ist aus Edelstahl oder einer Edelstahllegierung ausgebildet.

Das Verstärkungselement 24 erstreckt sich bevorzugt über die mindestens 90% der Länge des Lagerelements 12, bevorzugt 95%, 98% oder sogar über die gesamte Länge, so dass das Verstärkungselement 24 und das Lagerelement 12 gleich lang sind.

In Figur 2 ist eine weitere Ausführungsform gezeigt, die im Wesentlichen der Ausführungsform aus Figur 1 entspricht. Der Unterschied besteht darin, dass bei dieser Ausführungsform das Verstärkungselement 24 in das Lagerelement 12 eingelassen ist, dass das Lagerelement 12 also eine Aufnahmenut für das Verstärkungselement 24 aufweist, hier ist ein S-förmiges Verstärkungselement 24 gezeigt, aber auch ein rechteckiges Verstärkungselement oder jede andere Form kann in eine entsprechende Aufnahmenut eingesetzt werden.

Beispielhaft wird nun die Montage eines Befestigungsvorrichtung 10 anhand eines Tisches mit Tischplatte und Tischbein beschrieben. Zuerst wird in den Tisch eine der Befestigungsvorrichtung 10 entsprechende Aufnahme eingearbeitet. Dann wird je nach Verstärkungselement 24 dieses an der Tischplatte, oder dem Lagerelement befestigt oder das Verstärkungselement 24 wird mit dem Lagerelement 12 zusammen in die Aufnahme des Tisches eingesetzt und verschraubt. Dann wird das Tischbein in die Aufnahme 14 des Lagerelements 12 zwischen senkrechter Wand und Klemmstück 16 eingesetzt und das Klemmstück 16 mittels einer Schraube (nicht dargestellt) in dem Gewindeloch 19 festgezogen.

### Bezugszeichenliste

Möbelunterkonstruktion 8
Befestigungsvorrichtung 10
Bohrungen 11a, 11b
U-förmiges Lagerelement 12
Vorsprünge 13a, 13b
Aussparung 14
Durchgangsloch 15
Klemmstück 16
senkrechte Seite17
geneigte Seite 18
Gewindeloch 19
Absatz 20
Verstärkungselement 24
Basisplatte 24a
Schenkel 24b, 24c
Bohrungen 25a, 25b

## Patentansprüche

1. Befestigungseinrichtung (10) für eine Möbelunterkonstruktion (8), umfassend
ein Lagerelement (12), das zumindest abschnittsweise U-förmig ausgebildet ist und eine Aussparung (14) aufweist, bei der zumindest eine der Innenseiten (18) geneigt ausgebildet ist, und das Bohrlöcher (11a, 11b) aufweist, mittels der das Lagerelement (12) an einer Möbelplatte befestigbar ist; und
zumindest ein Klemmstück (16), das eine zur geneigten Innenseite des Lagerelements (12) entsprechend geneigte Klemmstückseite aufweist und mit einer Spannschraube an dem Lagerelement (12) verschraubbar ist, so dass durch das Festziehen der Spannschraube eine Seitenkraft auf eine zu befestigende Unterkonstruktion wirkt und diese verklemmt;
wobei
die Befestigungseinrichtung (10) ferner ein Verstärkungselement (24) umfasst, das fest mit dem Lagerelement (12) verbunden ist; und
das Lagerelement (12) aus einem weicheren Material ausgebildet ist, als das Verstärkungselement.

2. Befestigungseinrichtung nach Anspruch 1, bei der das Lagerelement (12) aus Aluminium, einer Aluminiumlegierung oder einer Legierung mit Aluminium ausgebildet ist und das Verstärkungselement (24) Stahl aufweist und/oder aus Edelstahl oder einer Edelstahllegierung ausgebildet ist.

3. Befestigungseinrichtung nach einem der vorhergehenden Ansprüche, bei der das Verstärkungselement (24) an zumindest zwei Außenseiten des U-förmigen Lagerelements (12) anliegt.

4. Befestigungseinrichtung nach einem der vorhergehenden Ansprüche, bei der zumindest zwei Verstärkungselemente (24) vorgesehen sind, die insbesondere in Bezug auf eine senkrechte Mittelachse (M) des Lagerelements (12) symmetrisch angeordnet sind.

5. Befestigungseinrichtung nach einem der vorhergehenden Ansprüche, bei der das U-förmige Lagerelement (12) seitlich abstehende Vorsprünge (13a, 13b) aufweist.

6. Befestigungseinrichtung nach einem der vorhergehenden Ansprüche, bei der an dem zumindest einen Verstärkungselement (24) Bohrungen (25a, 25b) vorgesehen sind, die mit den Bohrungen (11a, 11b) zum Befestigen des Lagerelements (12) übereinstimmen.

7. Befestigungseinrichtung nach einem der vorhergehenden Ansprüche, bei der das Verstärkungselement in dem Lagerelement (12) eingelassen ist, insbesondere derart, dass die Außenflächen von Verstärkungselement und Lagerelement (12) bündig sind.

8. Befestigungseinrichtung nach einem der vorhergehenden Ansprüche, bei der das Verstärkungselement (24) sich über 90% der Länge des Lagerelements (12) erstreckt.

## Claims

1. Fastening means (10) for a furniture supporting construction (8), comprising
a bearing means (12) which is at least partially U-shaped and has a recess (14) with at least one of the inner sides (18) being inclined, and which comprises boreholes (11a, 11b) by means of which the bearing means (12) is fastenable to a furniture board; and
at least one clamp (16), which has a clamp side that is inclined correspondingly to the inclined inner side of the bearing means (12) and can be screwed to the bearing means (12) by means of a clamp screw, so that, by tightening the clamp screw, a lateral force acts on a supporting construction to be fastened and clamps it;
wherein
the fastening means (10) further comprises a reinforcing element (24) fixedly connected to the bearing means (12); and
the bearing means (12) is made of a softer material than the reinforcing element.

2. The fastening means according to claim 1, wherein the bearing means (12) is made of aluminum, an aluminum alloy, or an alloy with aluminum, and the reinforcing element (24) comprises steel and/or is made of stainless steel or a stainless steel alloy.

3. The fastening means according to any preceding claim, wherein the reinforcing element (24) is in contact with at least two outer sides of the U-shaped bearing means (12).

4. The fastening means according to any preceding claim, wherein at least two reinforcing elements (24) are provided which are arranged symmetrically, in particular with respect to a vertical central axis (M) of the bearing means (12).

5. The fastening means according to any preceding claim, wherein the U-shaped bearing means (12) comprises laterally protruding projections (13a, 13b).

6. The fastening means according to any preceding claim, wherein boreholes (25a, 25b) are provided on the at least one reinforcing element (24), which boreholes (25a, 25b) correspond to the boreholes (11a, 11b) for fastening the bearing means (12).

7. The fastening means according to any preceding claim, wherein the reinforcing element is embedded in the bearing means (12), in particular such that the outer surfaces of the reinforcing element and the bearing means (12) are flush.

8. The fastening means according to any preceding claim, wherein the reinforcing element (24) extends over 90% of the length of the bearing means (12).

## Revendications

1. Dispositif de fixation (10) pour une sous-structure de meuble (8), comprenant un élément de support (12) qui est réalisé au moins partiellement en forme de U et qui présente un évidement (14) dans lequel au moins une des faces intérieures (18) est réalisée inclinée et qui présente des trous de perçage (11a, 11b) au moyen desquels l'élément de support (12) peut être fixé sur une plaque de meuble ; et
au moins une pièce de serrage (16) qui présente un côté de pièce de serrage incliné par rapport à la face intérieure inclinée de l'élément de support (12) et qui peut être vissée sur l'élément de support (12) au moyen d'une vis de serrage, de sorte que, en serrant la vis de serrage, une force latérale agit sur une sous-structure à fixer et bloque celle-ci ;
dans lequel
le dispositif de fixation (10) comprend en outre un élément de renforcement (24) qui est relié de façon solidaire à l'élément de support (12) ; et
l'élément de support (12) est formé en un matériau plus souple que l'élément de renforcement.

2. Dispositif de fixation selon la revendication 1, dans lequel l'élément de support (12) est formé en aluminium, en un alliage d'aluminium ou en un alliage avec de l'aluminium et l'élément de renforcement (24) comporte de l'acier et/ou est formé en acier inoxydable ou en un alliage d'acier inoxydable.

3. Dispositif de fixation selon l'une quelconque des revendications précédentes, dans lequel l'élément de renforcement (24) vient se mettre en butée contre au moins deux faces extérieures de l'élément de support en forme de U (12).

4. Dispositif de fixation selon l'une quelconque des revendications précédentes, dans lequel au moins deux éléments de renforcement (24) sont prévus qui sont disposés symétriquement, en particulier par rapport à un axe médian vertical (M) de l'élément de support (12).

5. Dispositif de fixation selon l'une des revendications précédentes, dans lequel l'élément de support (12) en forme de U présente des saillies (13a, 13b) faisant saillie latéralement.

6. Dispositif de fixation selon l'une quelconque des revendications précédentes, dans lequel ledit au moins un élément de renforcement (24) comporte des alésages (25a, 25b) qui coïncident avec lesdits alésages (11a, 11b) pour fixer ledit élément de support (12).

7. Dispositif de fixation selon l'une quelconque des revendications précédentes, dans lequel l'élément de renforcement est encastré dans l'élément de support (12), en particulier de telle sorte que les surfaces extérieures de l'élément de renforcement et de l'élément de support (12) sont affleurantes.

8. Dispositif de fixation selon l'une quelconque des revendications précédentes, dans lequel l'élément de renforcement (24) s'étend sur 90 % de la longueur de l'élément de support (12).
